# EUROPEAN PATENT APPLICATION

(11) **EP 3 316 626 A1**
(43) Date of publication of application: **02.05.2018**
(21) Application number: 17197806.7
(22) Date of filing: 23.10.2017
(51) Int. Cl.: H04W 48/16, H04W 84/12, H04W 88/04, H04W 48/18, H04W 8/00

(54) **METHOD AND APPARATUS FOR ACCESSING WIRELESS NETWORK WITH SMART DEVICE**

(30) Priority: 31.10.2016 CN 201610967608
(71) Applicant: Beijing Xiaomi Mobile Software Co., Ltd., Beijing 100085 (CN)
(72) Inventor: HOU, Enxing, Beijing, Beijing 100085 (CN); ZHANG, Yanlu, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method and an apparatus for accessing a wireless network with a smart device, the method including: providing a second device having a relay function; configuring a first SSID and a first password of the second device in advance in a first device without input means; determining (S101) whether the first SSID is scanned when the first device needs to access a wireless network; accessing (S102), when the first SSID is scanned, the second device according to the first SSID and the first password as pre-configured; acquiring (S103) a second SSID and a second password of the wireless network from the second device; and accessing (S104) the wireless network using the second SSID and the second password. According to the method, a device without input means is able to access the wireless network.

## Description

### TECHNICAL FIELD

The present disclosure relates to the field of communication, and more particularly, to a method and an apparatus for accessing a wireless network with a smart device.

### BACKGROUND

When a smart device accesses a router through wireless fidelity (referred to as Wi-Fi) technology, a user is generally required to enter a service set identifier (referred to as SSID) and a password of the router to be accessed through a keypad, a touch screen or the like. The above process is easy to be implemented by some devices having input means, such as mobile phones, tablet PCs and the like, but cannot be used by those devices without input means to access the router.

### SUMMARY

Accordingly, the present disclosure provides a method and an apparatus for accessing a wireless network with a smart device in accordance with claims which follow.

According to a first aspect of embodiments of the disclosure, there is provided a method for accessing a wireless network with a smart device, including:
determining whether a first service set identification (SSID) as pre-configured is scanned, wherein a second device having the first SSID is connected with the wireless network and provided with an activated relay function;
accessing, when the first SSID is scanned, the second device according to the first SSID with a first password as pre-configured in the second device;
acquiring a second SSID and a second password of the wireless network from the second device; and
accessing the wireless network using the second SSID and the second password.

Optionally, the determining whether a first service set identification SSID as pre-configured is scanned includes:
scanning surrounding access points to obtain a scan result comprising SSIDs of the scanned access points;
determining whether the first SSID is present in the scan result; and
determining, when the first SSID is present in the scan result, the first SSID is scanned.

Optionally, the acquiring of a second SSID and a second password of the wireless network from the second device includes:
sending a request message to the second device for acquiring the second SSID and the second password of the wireless network; and
receiving a request response sent by the second device, the request response carrying the second SSID and the second password of the wireless network.

Optionally, the acquiring a second SSID and a second password of the wireless network from the second device includes:
receiving the second SSID and the second password of the wireless network reported by the second device.

According to a second aspect of embodiments of the disclosure, there is provided an apparatus for accessing a wireless network with a smart device, including:
a determination module configured to determine whether a first service set identification SSID as pre-configured is scanned, wherein a second device having the first SSID is connected with the wireless network and provided with an activated relay function;
a first access module configured to access, when the first SSID is scanned, the second device according to the first SSID and a first password as pre-configured in the second device;
an acquisition module configured to acquire a second SSID and a second password of the wireless network from the second device; and
a second access module configured to access the wireless network using the second SSID and the second password.

Optionally, the apparatus further includes:
a scanning module configured to scan surrounding access points to obtain a scan result comprising SSIDs of the scanned access points;
the determination module comprises:
   a judgment submodule configured to determine whether the first SSID is present in the scan result; and
   a determination submodule configured to determine, when the first SSID is present in the scan result, the first SSID is scanned.

Optionally, the acquisition module includes:
a sending submodule configured to send a request message to the second device for acquiring the second SSID and the second password of the wireless network; and
a first receiving submodule configured to receive a request response sent by the second device, the request response carrying the second SSID and the second password of the wireless network.

Optionally, the acquisition module includes:
a second receiving submodule configured to receive the second SSID and the second password of the wireless network reported by the second device.

According to a third aspect of embodiments of the disclosure, there is provided an apparatus for accessing a wireless network with a smart device, including:
a processor; and
a memory configured to store instructions executable by the processor;
wherein the processor is configured to:
   determine whether a first service set identification SSID as pre-configured is scanned, wherein a second device having the first SSID is connected with the wireless network and provided with an activated relay function;
   access, when the first SSID is scanned, the second device according to the first SSID and a first password as pre-configured in the second device;
   acquire a second SSID and a second password of the wireless network from the second device; and
   access the wireless network using the second SSID and the second password.

According to a fourth aspect of the embodiment of the present disclosure, there is provided a computer program which, when being executed on a processor of a smart device, performs any one of the above methods according to the first aspect.

The embodiment of the present disclosure provides a technical solution having following advantageous effects. The method is implemented by: providing a second device having a relay function; configuring a first SSID and a first password of the second device in advance in a first device without input means; determining whether the first SSID is scanned when the first device needs to access a wireless network; accessing, when the first SSID is scanned, the second device according to the first SSID and the first password as preconfigured; acquiring a second SSID and a second password of the wireless network from the second device; and accessing the wireless network using the second SSID and the second password. According to the method, a device without input means is able to access the wireless network.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Figure 1 is a flowchart illustrating a method for accessing a wireless network with a smart device according to an exemplary embodiment.
Figure 2 is a flowchart illustrating a method for accessing a wireless network with a smart device according to an exemplary embodiment.
Figure 3 is a block diagram illustrating an apparatus for accessing a wireless network with a smart device according to an exemplary embodiment.
Figure 4 is a block diagram illustrating an apparatus for accessing a wireless network with a smart device according to an exemplary embodiment.
Figure 5 is a block diagram illustrating an apparatus for accessing a wireless network with a smart device according to an exemplary embodiment.
Figure 6 is a block diagram illustrating an apparatus for accessing a wireless network with a smart device according to an exemplary embodiment.
Figure 7 is an exemplified block diagram illustrating an apparatus for accessing a wireless network with a smart device according to an exemplary embodiment;

### DETAILED DESCRIPTION

Hereinafter, exemplary embodiments will be described in detail, examples of which are shown in the drawings. In the following description when referring to the drawings, the same numerals in the different drawings denote the same or similar elements unless otherwise indicated. The embodiments described in the following exemplary embodiments are not representative of all embodiments consistent with the present disclosure. Rather, they are merely examples of devices and methods consistent with some aspects of the disclosure as detailed in the appended claims.

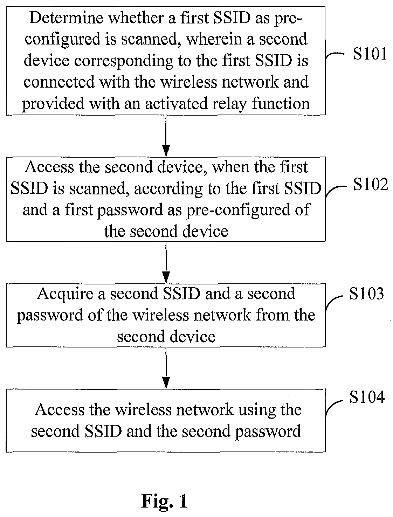

Figure 1 is a flowchart illustrating a method for accessing a wireless network with a smart device according to an exemplary embodiment. The method in the present embodiment may be implemented by a first device. As shown in Fig. 1, the method for accessing a wireless network with a smart device includes following steps.

In steps S101, it is determined whether a first SSID as pre-configured is scanned, wherein a second device corresponding to the first SSID is connected with the wireless network and provided with an activated relay function.

In the present embodiment, the first device is not provided with input means, such as a keyboard, a touch screen, and the like. The first device may be a smart device having no input means, such as a smart desk lamp, a smart socket, a smart purifier, and a smart keyboard. Since the first device is not provided with input means, a user cannot access a wireless network by entering an SSID and a password of the wireless network as doing with a device provided with input means.

In order to solve the problem that the first device cannot access the wireless network, a second device is preconfigured for the first device in the present embodiment. For example, a first SSID and a first password of the second device are prestored in the first device. The second device, which may be a mobile phone, a tablet computer, and the like, is provided with input means, and has a relay function in addition to normal functions when serving as a station (STA). As the second device has the relay function, it can serve as an access point having a first SSID and a first password that are fixed. Accordingly, when the first device without input means needs to access the wireless network, it may first access the second device using the first SSID and the first password of the second device as preconfigured, so as to obtain the second SSID and the second password of the wireless network through the second device.

The first device may scan its surrounding access points by active scanning or passive scanning. The active scanning may be performed by actively searching for the wireless network, rather than waiting for the presence statement from the wireless network itself. In an embodiment, the active scanning is performed by issuing a probe request on each channel from the first device serving as the STA, so as to request response from surrounding wireless network. On the other hand, power consumption can be saved by the passive scanning since no signal needs to be transmitted by the first device during the scanning. In the passive scanning, the STA switches between respective channels listed in a channel list so as to monitor arrival of a Beacon frame.

The scan result obtained by the first device may include SSIDs, signal quality, encryption and authentication modes of multiple access points. Accordingly, the first device may determine whether the first SSID is included in the scan result, and if the first SSID is included in the scan result, the first device determines that the first SSID and, thus, the second device are scanned. If the first SSID is not included in the scan result, it indicates that the second device does not have access to any network device, so it is impossible for the first device to obtain the second SSID and the second password of the wireless network through the second device, and access failure information may be prompted to the user.

In step S102, the second device is accessed, when the first SSID is scanned, according to the first SSID and a first password as pre-configured of the second device.

As the first SSID and the first password of the second device are preconfigured in the first device, if the first SSID is scanned by the first device, it indicates that the first device can access the second device. Accordingly, the first device may access the second device according to the first SSID and the first password of the second device that are preconfigured.

In step S103, a second SSID and a second password of the wireless network are acquired from the second device.

In an embodiment, after the first device accesses the second device, the first device sends a request message to the second device for requesting the second SSID and the second password of the wireless network. Then the second device returns a request response to the first device based on the request message. Accordingly, the first device receives the request response sent by the second device, which carries the second SSID and the second password of the wireless network.

In another embodiment, after the first device accesses the second device, the second device actively reports the second SSID and the second password of the wireless network to the first device. In this way, the first device receives the second SSID and the second password of the wireless network reported by the second device.

In step S103, the wireless network is accessed using the second SSID and the second password.

In a home network, for example, the first device may be a mobile phone, which accesses to a router in a typical manner and is provided with a first SSID and a first password that are fixed. Then, when same series of products, such as a smart socket, a smart purifier and a smart keyboard, are bought by the user, they may be configured with the first SSID and the first password of the mobile phone. Accordingly, the smart socket, smart purifier and smart keyboard may have access to the mobile phone using the first SSID and the first password of the mobile phone, so as to acquire the second SSID and the second password of the wireless network through the mobile phone and, then, access the wireless network according to the second SSID and the second password thereof.

According to the present embodiment, the second device having the relay function is provided, and the first SSID and the first password of the second device is configured in advance within the first device without input means. When the first device needs to access the wireless network, it is determined whether the first SSID is scanned. Then, the first device may access, when the first SSID is scanned, the second device according to the first SSID and the first password thereof as preconfigured; acquire the second SSID and the second password of the wireless network from the second device; and access the wireless network using the second SSID and the second password. According to the method, a device without input means is able to access the wireless network.

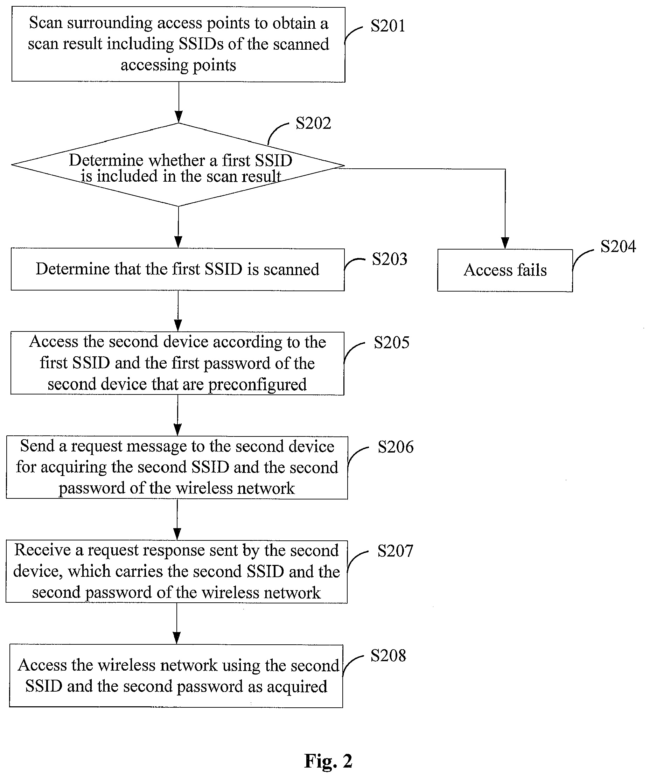

Figure 2 is a flowchart illustrating a method for accessing a wireless network with a smart device according to an exemplary embodiment. As shown in Fig. 2, the method for accessing a wireless network with a smart device includes following steps.

In step S201, surrounding access points are scanned to obtain a scan result including SSIDs of the scanned accessing points.

In step S202, it is determined whether a first SSID is included in the scan result.

In addition to SSIDs of the accessing points, the scan result may also include other parameters such as a signal strength of each access point. Moreover, the first SSID and the first password of the second device are preconfigured in the first device. when the first SSID is included in the scan result, step S203 is performed; and when the first SSID is not included in the scan result, step S204 is performed.

In step S203, it is determined that the first SSID is scanned.

In step S204, access fails.

In step S205, the second device is accessed according to the first SSID and the first password of the second device that are preconfigured.

Step S205 may be performed after step S203.

In step S206, a request message is sent to the second device for acquiring the second SSID and the second password of the wireless network.

In step S207, a request response sent by the second device is received, which carries the second SSID and the second password of the wireless network.

In step S208, the wireless network is accessed using the second SSID and the second password as acquired.

Alternatively, in another embodiment, after the first device accesses the second device, the second SSID and the second password of the wireless network may be also actively sent by the second device without sending request from the first device.

Specific implementation of the present embodiment may also refer to related description of the first embodiment and, thus, will not be elaborated herein.

According to the present embodiment, the first device scans its surrounding access points and determines whether the first SSID of the second device is included in the scan result. When the first SSID is included in the scan result, the first device accesses the second device according to the first SSID and the first password that are preconfigured, sends the request message to the second device, receives the request response carrying the second SSID and the second password of the wireless network from the second device, and accesses the wireless network using the second SSID and the second password. According to the method, a device without input means is able to access the wireless network.

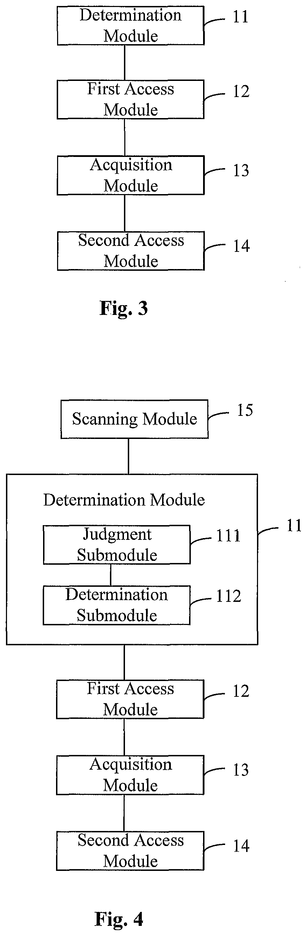

Figure 3 is a block diagram illustrating an apparatus for accessing a wireless network with a smart device according to an exemplary embodiment. As shown in Fig. 3, the apparatus in this embodiment includes: a determination module 11, a first access module 12, an acquisition module 13 and a second access module 14.

In an embodiment, the determination module 11 is configured to determine whether a first service set identification SSID as pre-configured is scanned. Herein, a second device corresponding to the first SSID is connected with the wireless network and provided with an activated relay function;

The first access module 12 is configured to access, when the first SSID is scanned, the second device according to the first SSID and a first password as pre-configured of the second device.

The acquisition module 13 is configured to acquire a second SSID and a second password of the wireless network from the second device.

The second access module 14 is configured to access the wireless network using the second SSID and the second password.

Figure 4 is a block diagram illustrating an apparatus for accessing a wireless network with a smart device according to an exemplary embodiment. As shown in Fig. 4, the apparatus in this embodiment includes, in addition to the apparatus as shown in Fig.3, a scanning module 15, and the determination module 11 further includes a judgment submodule 111 and a determination submodule 112.

The scanning module 15 is configured to scan surrounding access points to obtain a scan result comprising SSIDs of the scanned access points.

The judgment submodule 111 is configured to determine whether the first SSID is present in the scan result.

The determination submodule 112 is configured to determine, when the first SSID is present in the scan result, the first SSID is scanned.

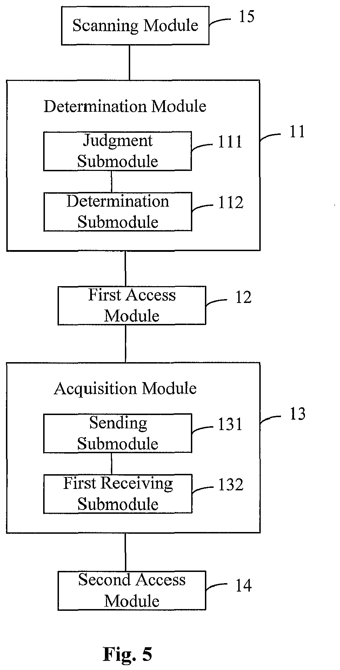

Figure 5 is a block diagram illustrating an apparatus for accessing a wireless network with a smart device according to an exemplary embodiment. As shown in Fig. 5, in addition to the apparatus as shown in Fig.4, the acquisition module 13 further includes:
a sending submodule 131 configured to send a request message to the second device for acquiring the second SSID and the second password of the wireless network; and
a first receiving submodule 132 configured to receive a request response sent by the second device, the request response carrying the second SSID and the second password of the wireless network.

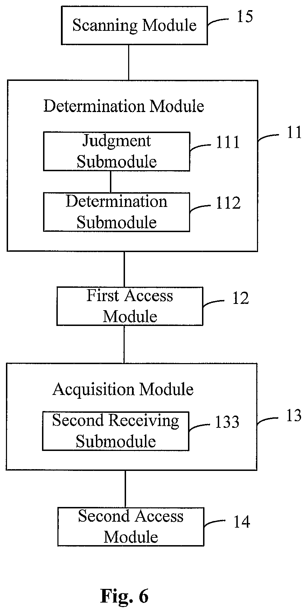

Figure 6 is a block diagram illustrating an apparatus for accessing a wireless network with a smart device according to an exemplary embodiment. As shown in Fig. 6, in addition to the apparatus as shown in Fig.4, the acquisition module 13 further includes:
a second receiving submodule 133 configured to receive the second SSID and the second password of the wireless network reported by the second device.

With respect to the apparatus in the above embodiment, the specific mode in which each module and the submodule performs the operation has been described in detail in the embodiment shown by Figs. 1 and 2 relating to the method, and the description thereof will not be described in detail herein.

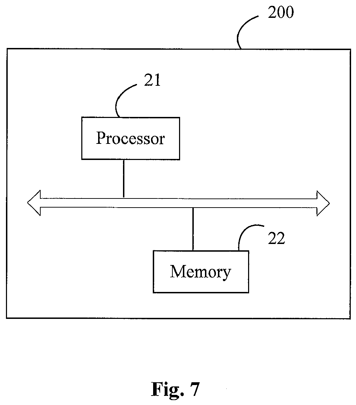

Figure 7 is an exemplified block diagram illustrating an apparatus for accessing a wireless network with a smart device according to an exemplary embodiment. As shown in Figure 7, the apparatus 200 for accessing a wireless network with a smart device includes a processor 21 and a memory 22 configured to store instructions executable by the processor 21. Herein, the memory 22 is connected to and communicates with the processor 21 through a system bus.

In an embodiment, the processor 21 is configured to:
determine whether a first SSID as pre-configured is scanned, wherein a second device corresponding to the first SSID is connected with the wireless network and provided with an activated relay function;
access, when the first SSID is scanned, the second device according to the first SSID and a first password as pre-configured of the second device;
acquire a second SSID and a second password of the wireless network from the second device; and
access the wireless network using the second SSID and the second password.

In the embodiment of the above-described recharge device, it is to be understood that the processor may be a Central Processing Unit abbreviation: CPU), and may be other general-purpose processors, Digital Signal Processor (referred to as DSP), Application Specific Integrated Circuit (referred to as ASIC) and so on. The general-purpose processor may be a microprocessor or a conventional processor, etc. The memory may be a read-only memory (ROM), a random access memory (read-only memory, referred to as RAM), flash memory, hard disk or solid state disk. The steps of the method disclosed in connection with the embodiments of the present disclosure may be embodied directly in the execution of the hardware processor or by the combination of hardware and software modules in the processor.

## Claims

1. A method for accessing a wireless network with a smart device, **characterized by** comprising:
determining (S101) whether a first service set identification (SSID) as pre-configured is scanned, wherein a second device having the first SSID is connected with the wireless network and provided with an activated relay function;
accessing (S102), when the first SSID is scanned, the second device according to the first SSID with a first password as pre-configured in the second device;
acquiring (S103) a second SSID and a second password of the wireless network from the second device; and
accessing (S104) the wireless network using the second SSID and the second password.

2. The method of claim 1, **characterized in that**, the determining whether a first service set identification SSID as pre-configured is scanned comprises:
scanning (S201) surrounding access points to obtain a scan result comprising SSIDs of the scanned access points;
determining (S202) whether the first SSID is present in the scan result; and
determining (S203), when the first SSID is present in the scan result, the first SSID is scanned.

3. The method of claim 1 or 2, **characterized in that**, the acquiring a second SSID and a second password of the wireless network from the second device comprises:
sending (S206) a request message to the second device for acquiring the second SSID and the second password of the wireless network; and
receiving (S207) a request response sent by the second device, the request response carrying the second SSID and the second password of the wireless network.

4. The method of claim 1 or 2, **characterized in that**, the acquiring a second SSID and a second password of the wireless network from the second device comprises:
receiving the second SSID and the second password of the wireless network reported by the second device.

5. An apparatus for accessing a wireless network with a smart device, **characterized by** comprising:
a determination module (11) configured to determine whether a first service set identification (SSID) as pre-configured is scanned, wherein a second device having the first SSID is connected with the wireless network and provided with an activated relay function;
a first access module (12) configured to access, when the first SSID is scanned, the second device according to the first SSID with a first password as pre-configured in the second device;
an acquisition module (13) configured to acquire a second SSID and a second password of the wireless network from the second device; and
a second access module (14) configured to access the wireless network using the second SSID and the second password.

6. The apparatus of claim 5, **characterized by** further comprising:
a scanning module (15) configured to scan surrounding access points to obtain a scan result comprising SSIDs of the scanned access points;
the determination module (11) comprises:
a judgment submodule (111) configured to determine whether the first SSID is present in the scan result; and
a determination submodule (112) configured to determine, when the first SSID is present in the scan result, the first SSID is scanned.

7. The apparatus of claim 5 or 6, **characterized in that**, the acquisition module (13) comprises:
a sending submodule (131) configured to send a request message to the second device for acquiring the second SSID and the second password of the wireless network; and
a first receiving submodule (132) configured to receive a request response sent by the second device, the request response carrying the second SSID and the second password of the wireless network.

8. The apparatus of claim 5 or 6, **characterized in that**, the acquisition module (13) comprises:
a second receiving submodule (133) configured to receive the second SSID and the second password of the wireless network reported by the second device.

9. An apparatus for accessing a wireless network with a smart device, **characterized by** comprising:
a processor (21); and
a memory (22) configured to store instructions executable by the processor;
wherein the processor is configured to:
determine whether a first service set identification (SSID) as pre-configured is scanned, wherein a second device having the first SSID is connected with the wireless network and provided with an activated relay function;
access, when the first SSID is scanned, the second device according to the first SSID with a first password as pre-configured in the second device;
acquire a second SSID and a second password of the wireless network from the second device; and
access the wireless network using the second SSID and the second password.

10. A computer program, when being executed on a processor of a smart device, performs a method for accessing a wireless network according to any one of claims 1-4.
